# EUROPÄISCHE PATENTSCHRIFT

(11) **EP 2 478 378 B1**
(45) Veröffentlichungstag und Bekanntmachung des Hinweises auf die Patenterteilung: **19.08.2015**
(21) Anmeldenummer: 10774118.3
(22) Anmeldetag: 13.09.2010
(51) Int. Cl.: G01N 35/00, G01N 1/31

(54) **OBJEKTTRÄGERHALTER**
OBJECT SUPPORT RETAINER
SUPPORT DE PORTE-OBJET

(30) Priorität: 14.09.2009 DE 102009041140
(43) Veröffentlichungstag der Anmeldung: 25.07.2012
(73) Patentinhaber: DCS Innovative Diagnostik Systeme Dr. Christian Sartori GmbH & Co. KG, 22397 Hamburg (DE)
(72) Erfinder: STRATMANN, Rembert, 22399 Hamburg (DE)
(74) Vertreter: Stüven, Ralf
(86) Internationale Anmeldenummer: PCT/DE2010/001073
(87) Internationale Veröffentlichungsnummer: WO 2011/029436

(56) Entgegenhaltungen:
- EP-A1- 1 691 185
- WO-A2-2009/074154
- US-A- 3 985 096
- US-A1- 2003 217 945

## Beschreibung

Die Erfindung betrifft einen Objektträgerhalter, insbesondere zur automatisierten Bearbeitungvon Objektträgern, eine den Objektträgerhalter umfassende Anordnung und ein Verfahren zur automatisierten Behandlung eines auf einem Objektträger fixierten Materials.

Die Bearbeitung von Objektträgern mit Reagenzien zur Färbung von auf den Objektträgern aufgebrachtem Untersuchungsmaterial ist ein häufig durchgeführtes Verfahren in der modernen Forschung und Diagnostik. Im Stand der Technik sind mittlerweile verschiedene Technologien verfügbar, um Objektträger mit Reagenzien automatisch zu behandeln.

Bei solchen Färbungen wird das auf dem Objektträger aufgebrachte zu untersuchende Material in aufeinander folgenden Schritten mit einer Reihe von Reagenzien inkubiert, die jeweils für eine bestimmte Zeit auf dem Untersuchungsgegenstand verbleiben, anschließend jedoch wieder entfernt werden müssen. Dies geschieht beispielsweise durch Spülen des Objektträgers mit einem Pufferüberschuss. Ein Problem hierbei ist jedoch, dass eine ungünstig gestaltete Objektträgerhalterung über die Benetzung mit z.B. Puffer kapillare Ströme hervorrufen kann, die dazu führen, dass das nachfolgende Reagenz vom Objektträger und damit vom Untersuchungsgegenstand entfernt wird. Dadurch ist es zum Beispiel schwierig oder sogar unmöglich, die für qualitativ hochwertige Färbungen erforderliche Einhaltung der vorgesehenen Inkubationszeit sicherzustellen.

Aus dem Stand der Technik sind Objektträgerhalter grundsätzlich bekannt. In der WO 2004/008106 A2 ist beispielsweise eine Halterung offenbart, bei der der Objektträger mithilfe einer Klammer gehalten wird, die den Mattrand des Objektträgers (das Beschriftungsfeld) einklemmt. Nachteil ist hieran das zumindest teilweise Abdecken des Beschriftungsfeldes, das durch Anbringen von beispielsweise Barcodes dazu genutzt wird, Färbeprozesse in der Automatisierung zu steuern.

Die US2003/217945 beschreibt einen Objektträgerhalter welcher sowohl einen Längs- als auch einen Quersteg aufweist und bei welchem ein Teil der Auflagefläche eine glatte Oberfläche aufweist. Der Objektträger wird dabei nicht durch Adhäsionskräfte gehalten.

In der EP 1.691.185 wird der Objektträger durch Adhäsionskräfte gehalten, jedoch ist dabei der Objektträger mit der Probe nach unten montiert, und die Form der Auflagefläche unterscheidet sich von jener der vorliegenden Anmeldung.

Die US 4.501.495 beschreibt einen Objektträgerhalter, bei dem die Objektträger mit Hilfe von Klebestreifen gehalten werden. Hieran ist beispielsweise nachteilig, dass die Klebestreifen regelmäßig erneuert werden müssen. Darüber hinaus können Wechselwirkungen zwischen dem Klebstoff und den Reagenzien nicht ausgeschlossen werden.

In der US 4.384.193 ist ein Objektträgerhalter offenbart, bei dem in einer Schale Metallblöcke angeordnet sind, auf denen die Objektträger gelagert werden. Die Metallblöcke sind mit quer verlaufenden Rillen versehen, um zu verhindern, dass übergetretene Flüssigkeit das Anhaften der Objektträger an den Metallblöcken durch Kapillareffekte bewirken kann.

In der WO 2006/116039 A2 ist ein Objektträgerhalter offenbart, bei dem über die Bildung einer Kammer ein Abfließen von Reagenz verhindert wird. Dieser Halter ist technisch aufwendig und die Abdeckung zur Kammerbildung muss bei jedem Reagenzienwechsel bewegt werden.

Aus dem Stand der Technik sind auch Objektträgerhalter bekannt, die eine Lösung des oben beschriebenen Problems hinsichtlich des Kapillareffektes vorschlagen. Die WO 99/49295 offenbart beispielsweise einen Objektträgerhalter für einen Färbeautomaten, bei dem Objektträger mit ihrem Rand auf Halterungen eines Einsatzes aufliegen, der in dem Färbeautomaten angeordnet wird. Auf dem Boden des Färbeautomaten können Vorsprünge vorgesehen sein, auf denen die Objektträger beim Einbringen des Einsatzes zu liegen kommen, so dass die Ränder der Objektträger in dem Bereich, in dem das Reagenz aufgebracht wird, keinen Kontakt mit dem Einsatz haben. Dadurch soll der oben beschriebene Kapillareffekt vermieden werden. Diese Lösung ist relativ aufwändig und nur zusammen mit dem besonders ausgestalteten Färbeautomaten realisierbar.

Darüber hinaus ist aus der WO 99/44030 ein Objektträgerhalter bekannt, bei dem der Objektträger mit der Unterseite an seinen Ecken auf speziell ausgestalteten Pfosten aufliegt, um den beschriebenen Kapillareffekt zu vermeiden. Nachteilig hieran ist unter anderem die vergleichsweise komplizierte Ausgestaltung der Pfosten.

Es ist auch bekannt, kapillare Ströme durch hydrophobe Grenzstriche zu unterbrechen. Hierbei werden in Vorbereitung auf die Automatisierung hydrophobe Grenzflächen auf dem Objektträger aufgebracht, um den Untersuchungsgegenstand abzugrenzen, und so einen Abbruch des kapillaren Stroms von auf den Untersuchungsgegenstand aufgebrachtem Reagenz zu verursachen. Das Aufbringen der Grenzstriche erfolgt manuell, ist umständlich und in nicht allen Fällen zuverlässig.

Aufgabe der vorliegenden Erfindung ist es, einen Objektträgerhalter bereitzustellen, der die Nachteile des Standes der Technik vermeidet, insbesondere in einfacher Weise herstellbar ist und es ermöglicht, Objektträger für automatisierte Färbeprozesse stabil zu lagern und dabei gleichzeitig das unkontrollierte Abfließen von Reagenz durch kapillare Ströme verhindert.

Die Aufgabe wird gelöst durch den Gegenstand des Anspruchs 1. Bevorzugte Ausgestaltungen der Erfindung sind in den Unteransprüchen angegeben.

Die Erfindung stellt einen Objektträgerhalter bereit, der mindestens eine Auflagefläche für einen Objektträger umfasst, wobei
a) die Auflagefläche einen Längssteg und einen im Wesentlichen quer zum Längssteg verlaufenden Quersteg aufweist"
b) der Längssteg so angeordnet ist, dass der Objektträger mit seiner Unterseite im Wesentlichen mittig auf dem Längssteg zu liegen kommt, und
c) die Auflagefläche mindestens in einem Teilbereich eine glatte Oberfläche aufweist, so dass der Objektträger im Einsatz durch Adhäsionskräfte zwischen übertretendem Behandlungsmittel und der Unterseite des Objektträgers einerseits und der glatten Oberfläche andererseits gehalten ist, und/oder die Auflagefläche mindestens in einem Teilbereich eine rutschfeste Oberfläche aufweist.

Unter einer "kapillaren Strömung" wird hier die Strömung einer Flüssigkeit verstanden, die durch Kapillarkräfte, d.h. durch Adhäsionskräfte, die zwischen einer Flüssigkeit und einem Feststoff wirken, hervorgerufen wird. Kapillare Ströme entstehen insbesondere an den Berührungsstellen der Kante der oberen, d.h. erdabgewandten, Oberfläche des Objektträgers mit der Lagerungs- bzw. Haltevorrichtung des Objektträgers. Kapillare Ströme können jedoch auch an den Berührungsstellen der Kante der unteren (erdzugewandten) Oberfläche des Objektträgers zur Lagerungs- bzw. Haltevorrichtung des Objektträgers entstehen. Über Flüssigkeitsbrücken, z.B. Tropfen, zur erdabgewandten Oberfläche kann es zu einem Abfluss von Reagenz vom Untersuchungsgegenstand kommen.

Unter einem "Objektträger" wird hier ein beliebiger Träger verstanden, auf dem ein Untersuchungsmaterial aufgebracht werden kann. Es kann sich beispielsweise um einen rechteckigen Glas-Objektträger in Form einer Glasplatte handeln, wie er beispielsweise in der Mikroskopie bzw. Histologie allgemein verwendet wird. Ein solcher Objektträger hat vorzugsweise die gemäß ISO 8255-2 üblichen Abmessungen (26 x 76 mm x 1-1,5 mm), kann aber auch andere Abmessungen aufweisen. Es kann sich auch um einen Kunststoffobjektträger, eine Membran oder dergleichen handeln, vorausgesetzt, die Träger weisen eine ausreichende Stabilität auf.

Unter der "Unterseite" des Objektträgers wird hier die nicht den Untersuchungsgegenstand tragende, erdzugewandte Fläche des Objektträgers verstanden.

Unter "mittig" wird hier verstanden, dass die entlang des Längsstegs verlaufenden Ränder des Objektträgers im Wesentlichen den gleichen Abstand zum Längssteg aufweisen. Im Falle eines üblichen rechteckförmigen Mikroskopobjektträgers mit Schmal- und Längsseiten bedeutet "mittig" beispielsweise, dass die Längsachse des Objektträgers und die Längsachse des Längsstegs in der Vertikalen im Wesentlichen direkt übereinander angeordnet sind und die parallel zum Längssteg verlaufenden Längsseiten im Wesentlichen den gleichen Abstand zur Längsachse des Längsstegs aufweisen.

Der Begriff "glatte Oberfläche" bedeutet hier eine durchgehend ebene Oberfläche mit geringer Rauheit. Insbesondere wird darunter eine Oberfläche verstanden, die die Ausbildung einer durchgehenden kapillaren wässrigen Flüssigkeitsschicht zwischen sich und der Unterseite eines Glasobjektträgers ermöglicht, so dass zwischen dem Glasobjektträger und der glatten Oberfläche Adhäsionskräfte wirken, die im Wesentlichen eine Bewegung des Objektträgers entgegen den Adhäsionskräften, d.h. regelmäßig in der Vertikalen, verhindern.

Der Begriff "rutschfeste Oberfläche" bedeutet in Zusammenhang mit der vorliegenden Erfindung eine Oberfläche, die so ausgebildet ist, dass der Objektträger bei Neigung des Objektträgerhalters oder der Auflagefläche gegenüber der Horizontalen nicht oder nur unwesentlich seine Position in Bezug auf den Objektträgerhalter dahingehend verändert, dass er an der Auflagefläche, insbesondere entlang der Längsachse des Längsstegs, entlanggleitet. Unter einer "rutschfesten Oberfläche" wird hier beispielsweise eine Oberfläche verstanden, bei der bei Neigung um mindestens 1°, vorzugsweise um mindestens 2°, 3°, 4°, 5°, 6°, 7°, 8°, 9°, 10°, 12°, 15°, 20°, 25° oder 30° kein oder ein nur unwesentliches Verrutschen des Objektträger entlang der Auflagefläche, insbesondere entlang der Längsachse des Längsstegs, gegenüber seiner Position in der Horizontalen eintritt. Unter einem "unwesentlichen Verrutschen" ist eine Positionsänderung des Objektträgers in Neigungsrichtung zu verstehen, die weniger als 5%, vorzugsweise weniger als 4%, 3%, 2%, 1% oder 0,5% der Längsausdehnung des Objektträgers in Neigungsrichtung beträgt.

Wenn hier der Begriff "Auflageebene" verwendet wird, ist hiermit die Ebene gemeint, in der der Teil der Unterseite des Objektträgers liegt, mit dem der Objektträger auf dem Objektträgerhalter aufliegt. Mit "Auflagefläche" ist die Fläche gemeint, die zur Lagerung des Objektträgers vorgesehen ist.

Die vorliegende Erfindung ermöglicht es, die Oberfläche des Objektträgers, auf der der Untersuchungsgegenstand fixiert ist, vollständig für Reagenz zugänglich zu halten. Dies ist deshalb vorteilhaft, da ein Untersuchungsgegenstand, z. B. Gewebeschnitte, technisch bedingt nicht exakt positioniert werden kann und so ggf. bis an den Rand der Reaktionsfläche heranreicht. Mit Reaktionsfläche ist hier der Bereich des Objektträgers gemeint, der üblicherweise nicht zur Identifizierung dient, also z.B. nicht der Mattrand bzw. das Beschriftungsfeld. Bei dem erfindungsgemäßen Objektträgerhalter ist darüber hinaus der Mattrand bzw. das Beschriftungsfeld für die automatische Datenerfassung vollständig zugänglich.

Der erfindungsgemäße Objektträgerhalter ermöglicht insbesondere auch eine stabile Lagerung des Objektträgers bei automatisierten Färbevorgängen. "Stabil" bedeutet, dass z.B. bei der Reagenzienzufuhr, Reagenzienentfernung und/oder bei einer Bewegungsübertragung durch den Automaten keine oder nur eine nur unwesentliche Bewegung des Objektträgers gegenüber dem Objektträgerhalter zustande kommt. Als Bewegungen des Objektträgers kommen dabei das Kippen um eine Längsachse (Rollen), das Kippen um eine Querachse (Nicken), das Drehen um eine Hochachse und das Verrutschen in Richtung einer Längs- und/oder Querachse in Frage. Mit Hilfe des erfindungsgemäßen Objektträgerhalters können solche Objektträgerbewegungen wirkungsvoll vermieden werden.

Eine stabile Halterung eines Objektträgers wird bei dem erfindungsgemäßen Objektträgerhalter durch die besondere Ausgestaltung der Auflagefläche erzeugt. Der Längssteg sorgt für eine Stabilisierung hinsichtlich der Querachse des Objektträgers, so dass ein Nicken um die Querachse verhindert wird. Der Quersteg verhindert ein Rollen um die Längssachse. Der Quersteg weist vorzugsweise eine Länge und Breite auf, die ein Entstehen einer kapillaren Strömung verhindert. Vorzugsweise ist die Länge des Querstegs kleiner als die Objektträgerbreite. Sie kann aber auch der Objektträgerbreite entsprechen oder über diese hinausgehen, z.B. bei Ausfuhrungsformen mit einer geneigten Auflagefläche. Unter der "Länge" des Querstegs wird hier seine Ausdehnung in Richtung quer zur Längsachse des Längsstegs, unter "Breite" die Ausdehnung in Richtung zur Längsachse des Längssteg verstanden. Bevorzugt beträgt die Länge des Querstegs mindestens 40%, mindestens 50%, mindestens 60%, mindestens 70% oder mindestens 80%, höchstens jedoch 90% der Breite des Objektträgers. Der Quersteg kann an einer beliebigen Position entlang des Längssteges vorgesehen sein, ist jedoch vorzugsweise vom Objektträgerrand ausreichend beabstandet, um das Entstehen einer kapillaren Strömung zu vermeiden. In einer bevorzugten Ausgestaltung befindet sich der Quersteg an einem Ende des Längsstegs und stützt den Objektträger in einem Randbereich, vorzugsweise dem Bereich des Mattrandes bzw. Beschriftungsfeldes, von unten. In dieser Ausgestaltung ist die Auflagefläche im Wesentlichen T-förmig. Der Quersteg kann aber auch an einer anderen Position entlang des Längssteges angeordnet sein, so dass sich beispielsweise eine im Wesentlichen kreuzförmige Ausgestaltung der Auflagefläche ergibt. Es versteht sich von selbst, dass gegebenenfalls mehrere Querstege vorgesehen sein können. Eine weitere Stabilisierung kann sich gegebenenfalls noch dadurch ergeben, dass am anderen Ende des Objektträgers ein weiterer Quersteg vorgesehen wird, der allerdings schmaler und gegebenenfalls auch kürzer ausfallen kann. Es ist bevorzugt, dass der Längssteg von allen Seitenrändern des Objektträgers, bei einem rechteckigen Objektträger also auch von dessen Schmalseiten, ausreichend beabstandet ist, um eine kapillare Strömung zu vermeiden. Der Längssteg weist vorzugsweise eine Länge auf, die mindestens 40%, bevorzugt mindestens 50%, mindestens 60%, mindestens 70% oder mindestens 80%, höchstens jedoch 90% der Länge des Objektträgers entspricht. Unter der "Länge" des Längsstegs wird hier dessen Ausdehnung in Richtung Längsachse verstanden, wobei auch der Abschnitt zur Länge hinzugerechnet wird, der Teil des Querstegs ist. Bei mehreren Querstegen werden sämtliche dieser Abschnitte zur Ermittlung der Längssteglänge einbezogen. Das Verhältnis der Längssteglänge zur Quersteglänge beträgt vorzugsweise 1:1 bis 6:1, weiter bevorzugt 1,2:1 bis 5:1; weiter bevorzugt 1,5:1 bis 4:1 und besonders bevorzugt 2:1 bis 3:1.

Eine weitere Stabilisierung des Objektträgers, insbesondere hinsichtlich des Kippens um die Längs- und/oder Querachse, kann bei dem erfindungsgemäßen Objektträgerhalter erreicht werden, indem dafür Sorge getragen wird, dass sich beim Spülen mit Wasser, Puffer oder dergleichen zwischen der Auflagefläche und der Unterseite des Objektträgers ein wässriger Flüssigkeitsfilm ausbildet, der aufgrund der entstehenden Adhäsionskräfte ein Anhaften des Objektträgers an der Auflagefläche bewirkt. Damit die Adhäsionskräfte über eine möglichst große Fläche wirksam werde können, ist die Auflagefläche vorzugsweise in einem möglichst großen Bereich mit einer glatten Oberfläche versehen. Vorzugsweise ist der erfindungsgemäße Objektträgerhalter daher so ausgestaltet, dass sich der Flüssigkeitsfilm zumindest über den Bereich des Längssteges ausbildet. In einer bevorzugten Ausführungsform ist der erfindungsgemäße Objektträgerhalter jedoch so ausgestaltet, dass sich der Flüssigkeitsfilm über die gesamte Auflagefläche, d.h. auch im Bereich des Quersteges, ausbildet.

Der Fachmann wird ohne Weiteres erkennen, dass auf den Quersteg auch ganz verzichtet werden kann, wenn der Längssteg in einer geeigneten Breite vorgesehen ist, die zwar geringer ist als die Breite des Objektträgers, um das Entstehen kapillarer Ströme zu verhindern, die aber ausreicht, um ein Rollen zu verhindern. Die geeignete Längsstegbreite hängt von dem Objektträger ab und kann vom Fachmann durch Routineversuche leicht ermittelt werden. Vorzugsweise ist der Längssteg dabei mit einer rutschfesten Oberfläche ausgestattet, wie sie weiter unten ausführlicher beschrieben ist.

Die Auflagefläche besteht bevorzugt aus Metall bzw. einer Metalliegierung, besonders bevorzugt aus Aluminium. Sie kann aber auch aus einem geeigneten Kunststoff hergestellt sein. Der Kunststoff sollte dabei dazu geeignet sein, dass sich zwischen seiner Oberfläche und einem darauf liegenden Objektträger ein dünner Flüssigkeitsfilm ausbilden kann, über den der Objektträger adhäsiv fixiert wird.

Alternativ oder gegebenenfalls auch zusätzlich kann die Auflagefläche zumindest teilweise mit einer rutschfesten Oberfläche versehen sein. Die Auflagefläche kann dabei nur im Bereich des Längssteges, entweder vollständig oder nur in einem Teilbereich davon, oder auch im Bereich des Quersteges mit einer rutschfesten Oberfläche versehen sein. Eine solche rutschfeste Oberfläche soll im Wesentlichen ein Verrutschen des Objektträgers in Richtung einer Längs- und/oder Querachse des Objektträgers verhindern und kann beispielsweise durch geeignete Strukturierung der Oberfläche oder durch Anordnung eines rutschfesten Materials, z.B. eines geeigneten Polymers, beispielsweise eines elastischen Materials wie z.B. Silikon auf bzw. in der Auflagefläche erzeugt sein. Die Auflagefläche, oder ein Teil davon, kann hierzu mit einem rutschfesten Material beschichtet sein. Es kann auch eine Vertiefung in der Auflagefläche, z.B. im Bereich des Längssteges, vorgesehen sein, in die das rutschfeste Material eingebracht ist. Die Wahl eines geeigneten rutschfesten Materials liegt innerhalb des Fachkönnens des Durchschnittsfachmanns und bedarf keiner erfinderischen Tätigkeit. Das Material sollte möglichst beständig gegenüber den einzusetzenden Reagenzien sein.

Bevorzugt ist das rutschfeste Material elastisch und besteht beispielsweise aus Silikon, besonders bevorzugt aus weichem Silikon, z. B. der Shore-Härte 30, mit einer glatten Kontaktfläche für den Objektträger. Die rutschfeste Oberfläche kann in einer bevorzugten Ausführungsform lediglich in einem begrenzten Bereich der Auflagefläche vorgesehen sein, beispielsweise an deren dem Quersteg gegenüberliegenden Ende, vorzugsweise innerhalb des Längsstegs an dem Ende, das von dem Mattrand bzw. dem Beschriftungsfeld am weitesten beabstandet ist, oder als Teil eines gegebenenfalls vorgesehenen zweiten Quersteges. Bei einer solchen Ausführungsform wird die rutschfeste Oberfläche hier auch als "Stopper" bezeichnet. Der Stopper kann beispielsweise kreisförmig, quadratisch oder in beliebiger anderer Form gestaltet sein, und ist so angeordnet, dass der Objektträger mit seinem dem Quersteg gegenüberliegenden Ende auf der Kontaktfläche des Stoppers, d.h. derjenigen Fläche des Stoppers, die mit dem Objektträger in Kontakt kommt, zu liegen kommt. Die durch den engen Kontakt zwischen Stopper und Objektträger ohne Flüssigkeitsfilm dazwischen entstehenden Adhäsionskräfte verhindern Dreh und/oder Rutschbewegungen des Objektträgers. Auch mehrere Stopper können vorgesehen sein. Der Stopper kann beispielsweise ein Silikonstopfen sein, der in eine entsprechende Ausnehmung des Längsstegs eingebracht ist. Vorzugsweise ist der Stopper dabei so gestaltet, dass bei Entnahme des Objektträgers die Adhäsionskräfte überwunden werden, der Stopper jedoch in der Ausnehmung des Objektträgerhalters verbleibt. Der Stopper kann zum Beispiel durch Verkleben, Verschrauben, Form- und/oder Kraftschluss fixiert sein. Vorzugsweise ist der Stopper lösbar fixiert.

Bevorzugt steht das rutschfeste Material geringfügig, beispielsweise 0,1 mm, in vertikaler bzw. erdabgewandter Richtung über die Ebene der glatten Oberfläche, die vorzugsweise die übrige Auflagefläche, d.h. den nicht mit dem rutschfesten Material versehenen Teil der Auflagefläche umfasst, vor. Die im flüssigkeitsgefüllten Spalt zwischen Objektträger und glatter Oberfläche wirkenden Adhäsionskräfte pressen den Objektträger auf das z.B. als Stopper ausgestaltete rutschfeste Material, das dadurch seine Form verändern kann, so dass sich beispielsweise die Kontaktfläche zusätzlich vergrößern und das rutschfeste Material mit seiner Oberfläche im Wesentlichen auf die Ebene der glatten Oberfläche heruntergedrückt werden kann. Hierdurch kommt es wiederum zu einer Verstärkung der Adhäsionskräfte zwischen rutschfester Oberfläche und Objektträger.

Der das rutschfeste Material bzw. den Stopper umfassende Bereich der Auflagefläche kann unter die von der übrigen Auflagefläche gebildete Ebene abgesenkt sein. Die Kontaktfläche des rutschfesten Materials kann dadurch beispielsweise auch ohne Einwirkung von Adhäsionskräften in Höhe der Ebene der übrigen Auflagefläche angeordnet sein. Darüber hinaus ist der das rutschfeste Material umfassende Bereich für den Fall, dass das rutschfeste Material vorsteht, vorzugsweise auch so gestaltet, dass sich das rutschfeste Material z.B. bei auftretenden Adhäsionskräften in dem Bereich ausdehnen kann. Dies kann z.B. so geschehen, dass ein Teil des abgesenkten Bereichs um das rutschfeste Material herum von rutschfestem Material freigehalten wird, so dass sich das rutschfeste Material dorthin ausdehnen kann.

Einem Verrutschen des Objektträgers entgegenzuwirken ist insbesondere vorteilhaft, wenn der Objektträger, wie es bevorzugt ist, so von dem Objektträgerhalter gehalten ist, dass er zu dem Ende des Objektträgers hin geneigt ist, das dem Mattrand bzw. Beschriftungsfeld gegenüberliegt. Auf diese Weise wird vermieden, dass Reagenz auf den Mattrand bzw. das Beschriftungsfeld gelangt. Eine solche Neigung kann beispielsweise dadurch erreicht werden, dass bei dem Objektträgerhalter die Auflagefläche selbst in entsprechender Weise geneigt angeordnet ist. Alternativ kann auch der Objektträgerhalter insgesamt geneigt sein.

Die durch den erfmdungsgemäßen Objektträgerhalter ermöglichte stabile Lagerung des Objektträgers ermöglicht auch die gezielte Bewegung des reagenzienbeschichteten Objektträgers zusammen mit dem Objektträgerhalter, um durch die dadurch erzeugte Konvektion eine Durchmischung bzw. bessere Durchmischung der Reagenzien und/oder eine höhere Reaktionsgeschwindigkeit zu erzielen. Bei der gezielten Bewegung kann es sich beispielsweise um eine Kipp-, Dreh-, Schüttel- oder Taumelbewegung handeln. Dabei wird der Objektträgerhalter in die entsprechende Bewegung versetzt, die dann von dem Objektträger mit vollzogen wird.

Erfindungsgemäß werden kapillare Ströme durch Geometrie und Anordnung von Längs- und Quersteg verhindert. Der Längssteg verläuft unterhalb des Bereiches der Reaktionsfläche des Objektträgers und hat ausreichend Abstand zu der erdabgewandten und erdzugewandten Kante des Objektträgers, um ein Entstehen kapillarer Ströme zu verhindern. Der Quersteg ist unterhalb des Mattrandes bzw. Beschriftungsfeldes angeordnet und erstreckt sich vorzugsweise nicht unter den Bereich mit der Reaktionsfläche des Objektträgers. Der Mattrand bzw. das Beschriftungsfeld verhindern das Entstehen von Kapillarbrücken zwischen objekttragender Fläche des Objektträgers und der Auflagefläche im Bereich des Querstegs. Ein optional vorhandener zweiter Quersteg ist entsprechend so angeordnet, dass ein ausreichender Abstand von den Objektträgerkanten eingehalten wird.

Vorzugsweise ist der Objektträgerhalter dahingehend ausgestaltet, dass er mehrere Objektträger aufnehmen kann. In diesem Fall ist es bevorzugt, dass die Auflageflächen, und damit auch die Objektträger, in einem Aufnahmeprofil angeordnet und durch geeignete Mittel voneinander getrennt werden. Dies kann beispielsweise durch Wände geschehen, die zwischen den Auflageflächen vorgesehen werden.

Die Erfindung betrifft in einem weiteren Aspekt auch eine Anordnung, die einen erfindungsgemäßen Objektträgerhalter und einen oder mehrere Objektträger umfasst.

In einem weiteren Aspekt betrifft die Erfindung auch ein Verfahren zur automatisierten Behandlung eines auf einem Objektträger fixierten Materials. Bei dem erfindungsgemäßen Verfahren wird der Objektträger von einem erfindungsgemäßen Objektträgerhalter, wie er oben beschrieben wurde, gehalten, Behandlungsmittel auf den Objektträger gegeben, und der Objektträgerhalter wird zusammen mit dem Objektträger in Bewegung versetzt. Bei der Bewegung handelt es sich vorzugsweise um eine Kipp-, Dreh-, Schüttel- oder Taumelbewegung.

Die durch den erfindungsgemäßen Objektträgerhalter bereitgestellte stabile Lagerung des Objektträgers ermöglicht es, diesen in Bewegung zu versetzen, ohne dass es zu einem nennenswerten Verrutschen des Objektträgers kommt. Die Bewegung des Objektträgers führtzu einer entsprechenden Bewegung auch der auf dem Objektträger befindlichen Reagenzien, und macht dadurch deren Vermischen möglich bzw. verbessert deren Vermischung. Dadurch kann die gewünschte Reaktion ermöglicht und/oder beschleunigt werden.

Für den Fall, dass mehrere Objektträger in eine Bewegung, z.B. eine Taumelbewegung versetzt werden sollen, ist es bevorzugt, dass die Objektträger jeweils gesondert in Objektträgerhaltern gehalten werden, statt sie beispielsweise in einem gemeinsamen Aufnahmeprofil anzuordnen. Dadurch kann eine gleichförmige Bewegung der Objektträger erreicht werden, während bei Anordnung in einem gemeinsamen Aufnahmeprofil die einzelnen Objektträger unterschiedliche Bewegungen durchführen würden.

In einer bevorzugten Ausgestaltung des erfindungsgemäßen Verfahrens ist das Behandlungsmittel ein wässriges Medium, vorzugsweise ein wässriges Färbungsreagenz, und das fixierte Material eine biologische Probe, vorzugsweise ein Gewebeschnitt oder ein Zellausstrich. Besonders bevorzugt ist das erfindungsgemäße Verfahren dabei zum Einsatz in der Histologie, Immunhistochemie, In-situ-Hybridisierung oder Mikroarrayprozessierung vorgesehen.

Die Erfindung wird im Folgenden, lediglich zur Veranschaulichung, anhand der beigefügten Figuren und bevorzugter Ausführungsformen, näher erläutert. Es zeigt
Fig. 1 eine Ausgestaltung des erfindungsgemäßen Objektträgerhalters,
Fig. 2 einen Teil des in Fig. 1 dargestellten Objektträgerhalters,
Fig. 3 eine andere Ausgestaltung des erfindungsgemäßen Objektträgerhalters mit einer rutschfesten Oberfläche,
Fig. 4 eine weitere Ausgestaltung des erfindungsgemäßen Objektträgerhalters mit einer rutschfesten Oberfläche in Form eines Stoppers
Fig. 5 eine weitere Darstellung der in Fig. 4 dargestellten Ausgestaltung des erfindungsgemäßen Objektträgerhalters.

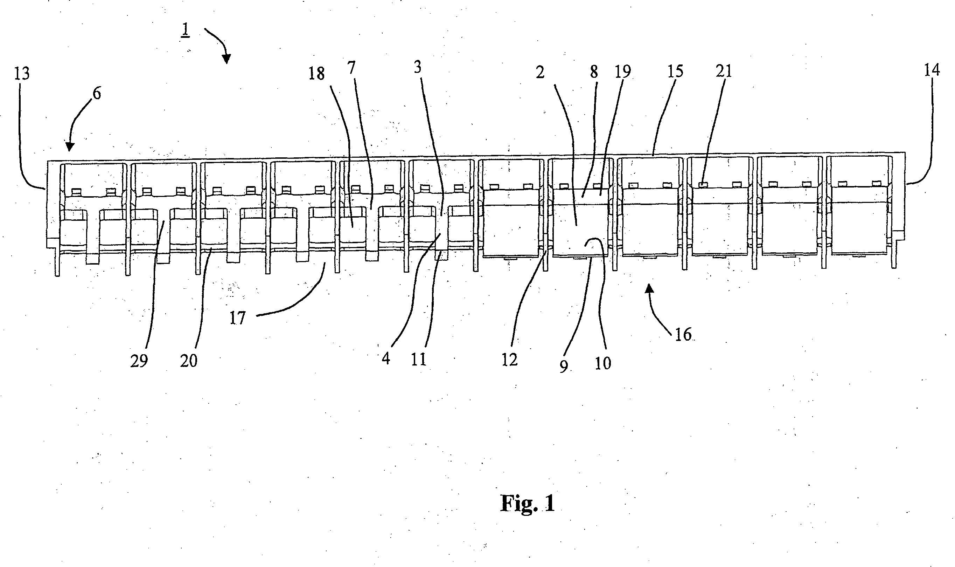

Fig. 1 zeigt eine Ausgestaltung des erfindungsgemäßen Objektträgerhalters 1. Der Objektträgerhalter 1 besteht hier aus einem Aufnahmeprofil 6 mit Außenwänden 13, 14 und 15. Das Aufnahmeprofil 6 ist zu der der Außenwand 15 bzw. dem Quersteg 5 gegenüberliegenden Seite 16 offen. Die Auflagefläche 3 ist im Wesentlichen T-förmig mit einem Längssteg 4 und einem Quersteg 5 ausgestaltet. Der Längssteg 4 steht im Wesentlichen senkrecht auf dem Quersteg 5 und erstreckt sich von dessen Mitte in Richtung der offenen Seite 16 des Aufnahmeprofils 6. Der Quersteg 5 ist zur Außenwand 15 des Aufnahmeprofils 6 hin angeordnet. Quersteg 5 und Längssteg 4 bilden eine durchgehende glatte Oberfläche 29. Es sind mehrere Auflageflächen 3 vorgesehen, von denen sechs (im linken Teil von Fig. 1) ohne Objektträger 2 und sechs mit Objektträger 2 dargestellt sind. Die Objektträger 2 liegen im Wesentlichen mittig mit ihrer Unterseite 9 und, mit Ausnahme des auf dem Quersteg 5 ruhenden Bereichs, mit ihrer ganzen Länge auf dem Längssteg 4 auf. Darüber hinaus liegen die Objektträger 2 im Bereich der Randfläche 8 mit ihrer Unterseite 9 auf dem Quersteg 5 auf. Die Oberseite 10 der Objektträger 2 ist mit dem Untersuchungsgegenstand versehen. Die Auflageflächen 3 sind durch Wände 12 voneinander getrennt, so dass ein Übertritt von Flüssigkeit von einem Objektträger 2 auf einen benachbarten Objektträger 2 bzw. eine Spritzkontamination verhindert ist. Der Boden 17 des Aufnahmeprofils 6 ist nicht vollständig geschlossen. Vielmehr sind zwischen den Wänden 13, 14 bzw. den Wänden 12 und den Längsstegen 5 Öffnungen 18 ausgebildet, durch die Puffer und dergleichen abfließen kann. Der Mattrand bzw. das Beschriftungsfeld 19 der Objektträger ist frei zugänglich. Über Stützstege 20 sind die Längsstege 4 im Bereich ihres Endes 11 mit den Wänden 12, 13, 14 verbunden.

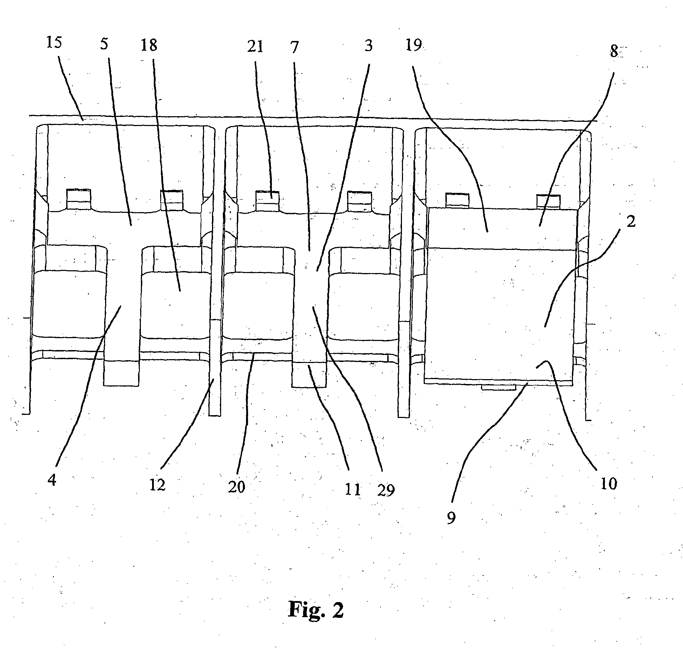

Figur 2 zeigt einen Ausschnitt der Figur 1. Hier sind Halterungen 21 deutlicher zu erkennen, die hier eine Stoßfläche für die Objektträger 2 bilden.

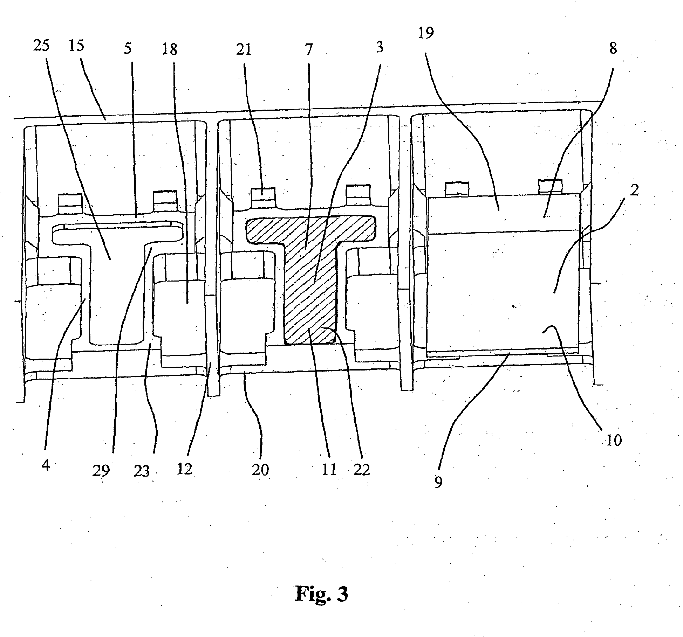

Figur 3 zeigt eine andere Ausgestaltung des erfindungsgemäßen Objektträgerhalters 1. Die Auflagefläche 3 weist hier im Bereich des Längssteges 4 und des Quersteges 5 eine rutschfeste Oberfläche 22 auf. Es handelt sich hierbei um eine T-förmige Silikonmatte, die in eine Ausnehmung 25 eingebracht ist. Darüber hinaus ist am zur offenen Seite 16 des Aufnahmeprofils 6 gelegenen Ende 11 des Längsstegs 4 ein zweiter Quersteg 23 vorgesehen, der allerdings schmaler als der Quersteg 5 ausgebildet ist und auch kürzere Schenkel aufweist. Der zweite Quersteg 23 ist mit Stützstegen 20 mit den jeweils benachbarten Wänden 12,13,14 verbunden.

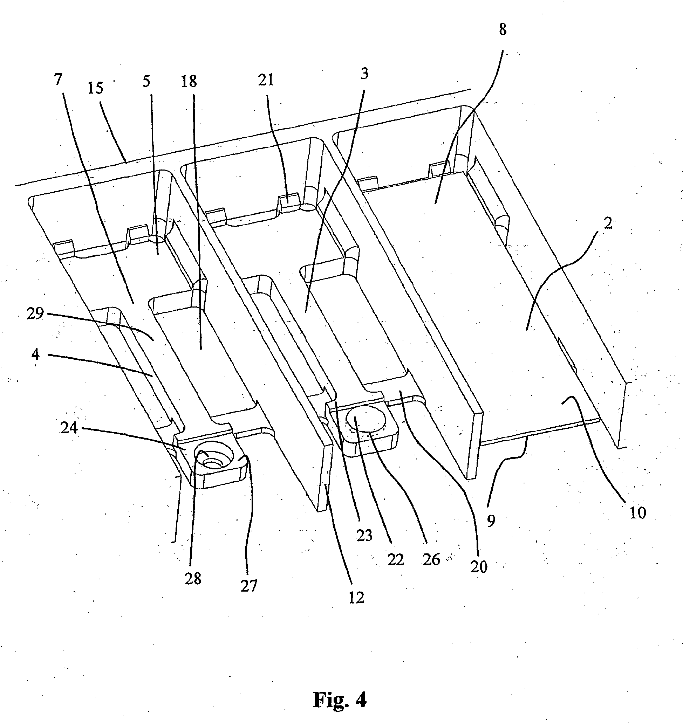

Figur 4 zeigt einen Teil einer weiteren Ausgestaltung des erfindungsgemäßen Objektträgerhalters 1. Bei dieser Ausgestaltung des Objektträgerhalters 1 ist zur offenen Seite 16 des Aufnahmeprofils 6 eine rutschfeste Oberfläche 22 in Form eines Stoppers 26 vorgesehen. Der Stopper 26 ist aus weichem Silikon gefertigt und mit seiner Basis in eine Ausnehmung 28 in einem Teilbereich 24 der Auflagefläche 3 eingebracht. Zum Quersteg 5 hin ist ein zweiter Quersteg 23 vorgesehen. Der den Stopper 26 umfassende Teilbereich 24 der Auflagefläche 3 ist unter die übrige Oberfläche der Auflagefläche 3, auf der der Objektträger 2 mit seiner Unterseite 9 aufliegt, abgesenkt. Der Stopper 26 ragt über die Ebene der Fläche 27 des Teilbereichs 24 hinaus, so dass die rutschfeste Oberfläche 22 in die vom übrigen Teil der Auflagefläche 3 gebildete Ebene hinein- oder geringfügig über diese hinausragt. Der Objektträger 2 liegt im Einsatz auf dem nicht abgesenkten Teil der Auflagefläche 3 und auf dem Stopper 26 auf. Der Stopper 26 wird in einer Ausgestaltung, in der die rutschfeste Oberfläche 22 noch über die Ebene des nicht abgesenkten Teils der Auflagefläche 3 hinausragt, durch Adhäsionskräfte, die zwischen der Auflagefläche 3 und der Unterseite 9 des Objektträgers 2 wirken, wenn dort z.B. durch überfließenden Puffer ein Flüssigkeitsfilm vorhanden ist, wird der Stopper 26 zusammengepresst, so dass die rutschfeste Oberfläche 22 in der Ebene des nicht abgesenkten Teils der Auflagefläche 3 zu liegen kommt. Der nicht in der Ausnehmung 28 befindliche Teil des Stoppers 26 dehnt sich dabei in den anliegenden freien Raum aus.

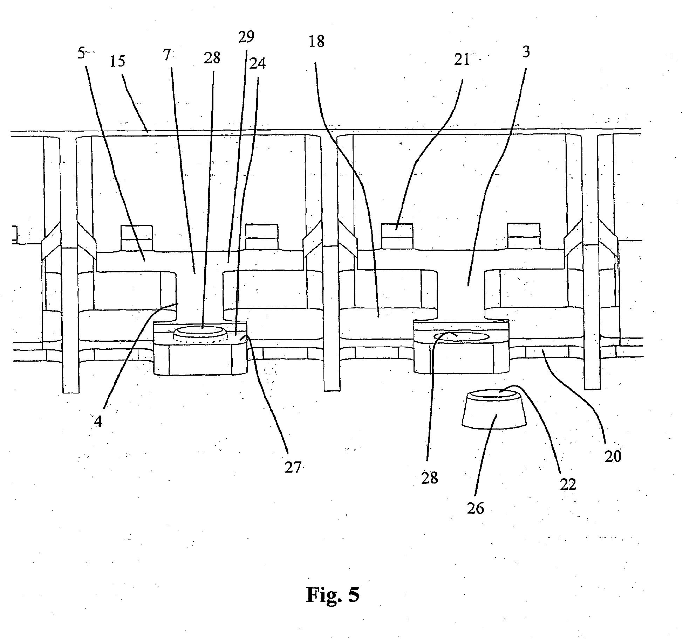

In Figur 5 ist die in Figur 4 dargestellte Ausführungsform des erfindungsgemäßen Objektträgerhalters 1 aus einer anderen Perspektive dargestellt. Im rechten Teil der Abbildung ist ein aus der Ausnehmung 28 entnommener. Stopper 26 dargestellt.

### Bezugszeichenliste

- 1: Objektträgerhalter
- 2: Objektträger
- 3: Auflagefläche
- 4: Längssteg
- 5: Quersteg
- 6: Aufnahmeprofil
- 7: Ende
- 8: Randfläche
- 9: Unterseite des Objektträgers
- 10: Oberseite (Probenseite) des Objektträgers
- 11: Ende
- 12: Wand
- 13: Außenwand des Aufnahmeprofils
- 14: Außenwand des Aufhahmeprofils
- 15: Außenwand des Aufnahmeprofils
- 16: Seite
- 17: Boden des Aufnahmeprofils
- 18: Öffnung
- 19: Mattrand/Beschriftungsfeld
- 20: Stützsteg
- 21: Halterungen
- 22: rutschfeste Oberfläche
- 23: Zweiter Quersteg
- 24: Teilbereich
- 25: Ausnehmung
- 26: Stopper
- 27: Fläche
- 28: Ausnehmung
- 29: Glatte Oberfläche

## Patentansprüche

1. Objektträgerhalter (1) mit mindestens einer Auflagefläche (3) für einen Objektträger (2), wobei
a) die Auflageflache (3) einen Längssteg (4) und einen im Wesentlichen quer zum Längsstegs (4) verlaufenden Quersteg (5) aufweist, und
b) die Auflagefläche (3) mindestens in einem Teilbereich eine glatte Oberfläche (29) aufweist, **gekennzeichnet dadurch, dass**
- der Längssteg (4) so angeordnet ist, dass der Objektträger (2) mit seiner Unterseite (9) im Wesentlichen mittig auf dem Längssteg (4) zu liegen kommt, und
- dass der Objektträger (2) im Einsatz durch Adhäsionskräfte zwischen übertretendem Behandlungsmittel und der Unterseite (9) des Objektträgers (2) einerseits und der glatten Oberfläche (29) andererseits gehalten ist, und/oder die Auflagefläche (3) mindestens in einem Teilbereich eine rutschfeste Oberfläche (22) aufweist.

2. Objektträgerhalter nach Anspruch 1, **dadurch gekennzeichnet, dass** die Auflagefläche (3) im Wesentlichen T-förmig ausgestaltet ist, so dass der Objektträger (2) mit einer Randfläche (8) seiner Unterseite (9) auf dem Quersteg (5) zu liegen kommt.

3. Objektträgerhalter nach einem der vorhergehenden Ansprüche, **dadurch gekennzeichnet, dass** die rutschfeste Oberfläche (22) durch ein auf oder in der Auflagefläche (3) angeordnetes rutschfestes Material, bevorzugt ein elastisches rutschfestes Material, besonders bevorzugt Silikon, erzeugt ist und das rutschfeste Material im Bereich des Längsstegs (4), vorzugsweise auch im Bereich des Querstegs (5), angeordnet ist.

4. Objektträgerhalter nach Anspruch 3, **dadurch gekennzeichnet, dass** das rutschfeste Material an dem dem Quersteg (5) gegenüberliegenden Ende der Auflagefläche (3) in einem Teilbereich (24) der Auflagefläche (3) angeordnet ist.

5. Objektträgerhalter nach Anspruch 4, **dadurch gekennzeichnet, dass** der Teilbereich (24) eine Ausnehmung (29) aufweist, in der das rutschfeste Material angeordnet ist.

6. Objektträgerhalter nach Anspruch 4 öder 5, **dadurch gekennzeichnet, dass** der Teilbereich (24) gegenüber der von den Oberflächen des Längsstegs (4) und Querstegs (5) gebildeten Ebene abgesenkt ist.

7. Objektträgerhalter nach einem der Ansprüche 3 bis 6, **dadurch gekennzeichnet, dass** das rutschfeste Material (22) soweit über die Ebene der glatten Oberfläche (29) vorsteht, dass die Oberfläche des rutschfesten Materials (22) im Einsatz aufgrund der zwischen der glatten Oberfläche (29) und dem Objektträger (2) wirkenden Adhäsionskräfte im Wesentlichen auf die Ebene der glatten Oberfläche (29) herabgedrückt ist.

8. Objektträgerhalter nach einem der vorherhegenden Ansprüche, **dadurch gekennzeichnet, dass** die Auflagefläche (3) zu dem dem Ende (7) des Längsstegs (4) gegenüberliegenden Ende (11) des Längsstegs (4) hin geneigt ist.

9. Objektträgerhalter nach einem der vorhergehenden Ansprüche, **dadurch gekennzeichnet, dass** in einem Aufnahmeprofil (6) eine Mehrzahl von Auflageflächen (3) vorgesehen ist, die durch Wände (12) voneinander getrennt sind.

10. Anordnung, umfassend einen Objektträgerhalter (1) nach einem der Ansprüche 1 bis 9 und einen oder mehrere Objektträger (2).

11. Verfahren zur automatisierten Behandlung eines auf einem Objektträger fixierten Materials, **dadurch gekennzeichnet, dass** der Objektträger von einem Objektträgerhalter nach einem der Ansprüche 1 bis 9 gehalten, Behandlungsmittel auf den Objektträger gegeben, und der Objektträgerhalter zusammen mit dem Objektträger in Bewegung versetzt wird.

12. Verfahren nach Anspruch 11, **dadurch gekennzeichnet, dass** der Objektträgerhalter in eine Kipp-, Dreh-, Schüttel- oder Taumelbewegung versetzt wird.

13. Verfahren nach einem der Ansprüche 11 oder 12, **dadurch gekennzeichnet, dass** als Behandlungsmittel ein wässriges Medium, vorzugsweise ein wässriges Färbungsreagenz, verwendet wird und das fixierte Material eine biologische Probe, vorzugsweise ein Gewebeschnitt oder ein Zellausstrich ist.

## Claims

1. An object support retainer (1) with at least one bearing surface (3) for an object support (2), wherein
a) the bearing surface (3) has a longitudinal web (4) and a transverse web (5) extending substantially transversely to the longitudinal web (4), and
b) the bearing surface (3) has a smooth surface (29) at least in a partial area, **characterised in that**
- the longitudinal web (4) is arranged in such a way that the underside (9) of the object support (2) comes to lie substantially centered on the longitudinal web (4), and
- that the object support (3) is retained during use by adhesive forces between overflowing treating agent and the underside (9) of the object support (3) on one side and the smooth surface (29) on the other side, and/or the bearing surface (3) has a slip-resistant surface (22) at least in a partial area.

2. The object support retainer according to claim 1, **characterized in that** the bearing surface (3) is configured substantially in a T-shape, so that the object support (2) comes to lie with an edge surface (8) of its underside (9) on the transverse web (5).

3. The object support retainer according to one of the preceding claims, **characterized in that** the slip-resistant surface (22) is produced by a slip-resistant material arranged on or in the bearing surface (3), preferably an elastic slip-resistant material, particularly preferably silicone, and the slip-resistant material is arranged in the region of the longitudinal web (4), preferably also in the region of the transverse web (5).

4. The object support retainer according to claim 3, **characterized in that** the slip-resistant material is arranged on the end of the bearing surface (3) lying opposite the transverse web (5) in a partial area (24) of the bearing surface (3).

5. The object support retainer according to claim 4, **characterized in that** the partial area (24) has a recess (29) in which the slip-resistant material is arranged.

6. The object support retainer according to claim 4 or 5, **characterized in that** the partial area (24) is lowered with respect to the plane formed by the surfaces of the longitudinal web (4) and of the transverse web (5).

7. The object support retainer according to one of claims 3 to 6, **characterized in that** the slip-resistant material (22) projects so far over the plane of the smooth surface (29) that the surface of the slip-resistant material (22) in use is pressed down substantially onto the plane of the smooth surface (29) owing to the adhesive forces acting between the smooth surface (29) and the object support (2).

8. The object support retainer according to one of the preceding claims, **characterized in that** the bearing surface (3) is inclined towards the end (11) of the longitudinal web (4) lying opposite the end (7) of the longitudinal web (4).

9. The object support retainer according to one of the preceding claims, **characterized in that** in a receiving profile (6) a plurality of bearing surfaces (3) is provided, which are separated from each other by walls (12).

10. An arrangement comprising an object support retainer (1) according to one of claims 1 to 9 and one or more object supports (2).

11. A method for the automated treatment of a material fixed on an object support, **characterized in that** the object support is held by an object support retainer according to one of claims 1 to 9, treating agent is supplied onto the object support, and the object support retainer is set in motion together with the object support.

12. The method according to claim 11, **characterized in that** the object support retainer is set into a tipping, rotating, shaking or tumbling motion.

13. The method according to one of claims 11 or 12, **characterized in that** an aqueous medium, preferably an aqueous staining reagent, is used as treating agent, and the fixed material is a biological specimen, preferably a tissue section or a cell smear.

## Revendications

1. Support de porte-objets (1) avec au moins une surface d'appui (3) pour un porte-objets (2), pour lequel
a) la surface d'appui (3) comporte une nervure longitudinale (4) et une nervure transversale (5) passant pour l'essentiel en travers de la nervure longitudinale (4), et
b) la surface d'appui (3) comporte une surface lisse (29) au moins dans une zone de partage **caractérisé en ce que**
- la nervure longitudinale (4) est disposée de telle sorte que le porte-objets (2) vient reposer avec sa face inférieure (9) pour l'essentiel au centre sur la nervure longitudinale (4), et
- **en ce que** le porte-objets (2) est maintenu en service par des forces d'adhésion entre le moyen de traitement dépassant et la face inférieure (9) du porte-objets (2) d'une part et la surface lisse (29) d'autre part, et/ou la surface d'appui (3) comporte une surface antidérapante (22) au moins dans une zone de partage

2. Support de porte-objets selon la revendication 1 **caractérisé en ce que** la surface d'appui (3) est constituée pour l'essentiel en forme de "T" de sorte que le porte-objets (2) vient reposer avec une surface de bord (8) de sa face inférieure (9) sur la nervure transversale (5).

3. Support de porte-objets selon l'une quelconque des revendications précédentes **caractérisé en ce que** la surface antidérapante (22) est réalisée par un matériau antidérapant disposé sur ou dans la surface d'appui (3), de préférence un matériau antidérapant élastique, en particulier de préférence du silicone et le matériau antidérapant est disposé dans la zone de la nervure longitudinale (4), de préférence également dans la zone de la nervure transversale (5).

4. Support de porte-objets selon la revendication 3 **caractérisé en ce que** le matériau antidérapant est disposé sur l'extrémité de la surface d'appui (3), opposée à la nervure transversale (5) dans une zone de partage (24) de la surface d'appui (3).

5. Support de porte-objets selon la revendication 4 **caractérisé en ce que** la zone de partage (24) comporte un évidement (29) dans lequel est disposé le matériau antidérapant.

6. Support de porte-objets selon la revendication 4 ou 5 **caractérisé en ce que** la zone de partage (24) est abaissée vers le bas vis-à-vis du plan formé par les surfaces de la nervure longitudinale (4) et de la nervure transversale (5).

7. Support de porte-objets selon l'une quelconque des revendications 3 à 6 **caractérisé en ce que** le matériau antidérapant (22) fait saillie au-dessus du plan de la surface lisse (29) à tel point que la surface du matériau antidérapant (22) est appuyée vers le bas en cours d'utilisation en raison des forces d'adhésion agissant entre la surface lisse (29) et le porte-objets (2) pour l'essentiel sur le plan de la surface lisse (29).

8. Support de porte-objets selon l'une quelconque des revendications précédentes **caractérisé en ce que** la surface d'appui (3) est inclinée vers l'extrémité (11) de la nervure longitudinale (4), opposée à l'extrémité (7) de la nervure longitudinale (4).

9. Support de porte-objets selon l'une quelconque des revendications précédentes **caractérisé en ce que** dans un profil de réception (6) est prévue une pluralité de surfaces d'appui (3) qui sont séparées les unes des autres par des parois (12).

10. Agencement comprenant un support de porte-objets (1) selon l'une quelconque des revendications 1 à 9 et un ou plusieurs porte-objets (2).

11. Procédé pour le traitement automatisé d'un matériau fixé sur un porte-objets **caractérisé en ce que** le porte-objets est maintenu par un support de porte-objets selon l'une quelconque des revendications 1 à 9, des moyens de traitement sont prévus sur le porte-objets et le support de porte-objets est mis en mouvement ensemble avec le porte-objets.

12. Procédé selon la revendication 11 **caractérisé en ce que** le support de porte-objets est déplacé dans un mouvement de bascule, de rotation, de vibration ou d'oscillation.

13. Procédé selon l'une quelconque des revendications 11 ou 12 **caractérisé en ce qu'**un milieu aqueux, de préférence un réactif de coloration aqueux est utilisé comme moyen de traitement et le matériau fixé est un échantillon biologique, de préférence une coupe histologique ou un frottis cellulaire.
